# FASCICULE DE BREVET EUROPEEN

(11) **EP 2 388 973 B1**
(45) Date de publication et mention de la délivrance du brevet: **22.07.2015**
(21) Numéro de dépôt: 11166578.2
(22) Date de dépôt: 18.05.2011
(51) Int. Cl.: H04L 29/06

(54) **Procédé de récupération automatique de documents annexes dans une édition multimédia**
Verfahren zur automatischen Wiederherstellung von Dokumenten in der Anlage in einer Multimedia-Ausgabe
Method for automatic retrieval of attached documents in a multimedia publication.

(30) Priorité: 19.05.2010 FR 1053891
(43) Date de publication de la demande: 23.11.2011
(73) Titulaire: Momindum, 75014 Paris (FR)
(72) Inventeur: Pauly, Mathieu, 94000 Créteil (FR)
(74) Mandataire: Pontet Allano & Associes

(56) Documents cités:
- US-A1- 2004 006 592
- US-A1- 2008 270 110
- US-A1- 2008 270 344

## Description

La présente invention concerne un procédé pour élaborer un contenu rich-média à partir d'une prestation orale réalisée par un utilisateur. Un contenu rich-média contient plusieurs éléments hétérogènes tels que des fichiers et/ou des applications qui sont aptes à être lus par un lecteur multimédia dédié. L'ensemble lecteur multimédia et contenu rich-média constitue une édition multimédia.

L'invention vise également un moyen de stockage informatique contenant des instructions pour la mise en oeuvre d'un tel procédé.

Par prestations orales on entend ici toutes conférences ou leçons, et tous discours et exposés, enregistrées sous forme vidéo et/ou audio.

Il existe actuellement des besoins pour une production rapide d'environnements multimédia autour de flux vidéo, avec des accès ciblés et des compléments d'informations synchrones.

On peut notamment citer à titre non limitatif le cas des conférences et colloques juridiques ou scientifiques qui font de plus en plus souvent l'objet d'enregistrements vidéo et d'une diffusion d'un support multimédia contenant à la fois les exposés des conférenciers et de documents associés à ces exposés, qui peuvent être visualisés simultanément.

Les flux vidéo résultant de ces enregistrements correspondent de façon générale à une information discursive:
- structurée (avec un plan complexe structuré en parties et sous-parties de différents niveaux)
- associée de façon plus ou moins directe à des données complémentaires, de nature variée, qu'il peut être pertinent de consulter ou avoir à disposition en parallèle à l'écoute du flux vidéo.

Ces données complémentaires sont elles-mêmes situées de façon plus ou moins précise par rapport à un moment du flux vidéo.

On s'est rendu compte qu'il était intéressant de proposer à un utilisateur d'une édition multimédia une grande quantité de documents complémentaires cités ou évoqués lors de la conférence. Il s'agit donc d'enrichir le contenu rich-média qui contient des données hétérogènes relatives à la conférence. Or, il s'avère que dans les procédés actuels, pour produire des éditions multimédia enrichies, une personne doit revoir l'ensemble de la prestation orale une fois la conférence terminée, choisir un certain nombre de documents intéressants, puis les introduire manuellement dans le contenu rich-média. Un tel processus reste aléatoire en qualité, n'est pas pertinent et nécessite pour chaque édition multimédia une phase de développement relativement coûteuse.

Par exemple, le document US 2008/270110 A1 décrit une méthode pour capturer et indéxer une présentation rich-média. Les contenus visuels textuels et audio sont capturés pendant la présentation puis indexés. Ledit document concerne particulièrement la création de l'index du contenu audio en utilisant une reconnaissance automatique de la parole en corrélation avec du texte capturédans la présentation rich-media. D1 ne permet pas l'utilisation d'un lien vers un contenu extérieur pour importer et sauvegarder ce contenu extérieur dans le contenu rich-média la synchronisation en associant ce contenu extérieur à un code temporel.

La présente invention a pour objectif un nouveau procédé d'enrichissement d'une édition multimédia moins coûteuse.

Un autre objectif de l'invention est d'accélérer la production d'une édition multimédia.

On atteint au moins l'un des objectifs précités avec un procédé pour élaborer un contenu rich-média à partir d'une prestation orale réalisée par un utilisateur ; cet utilisateur se servant d'une unité de traitement et d'un écran pour afficher au moins un document de présentation ; le contenu rich-média comprenant un flux vidéo et/ou audio et des codes temporels acquis en temps réel.

Selon l'invention, pour chaque document de présentation ouvert par l'utilisateur lors de l'acquisition du flux vidéo et/ou audio en temps réel :
- on sauvegarde de façon automatique et en temps réel ce document de présentation dans le contenu rich-média,
- on réalise une synchronisation en associant ce document de présentation à un code temporel,
- on sauvegarde de façon automatique et en temps réel chaque partie de document de présentation telle qu'affichée successivement sur l'écran,
- on réalise une synchronisation en associant chaque partie affichée du document de présentation à un code temporel qui est relatif à l'instant d'affichage de la partie affichée,
- on extrait et on analyse de façon automatique et en temps réel le texte contenu dans chaque partie affichée du document de présentation de façon à détecter une liste de mots clés que l'on sauvegarde sous forme de métadonnées dans le contenu rich-média.

Avec le procédé selon l'invention, on réalise une analyse automatique de façon à intégrer de nouvelles ressources telles que des mots clés dans le contenu rich-média. Les ressources peuvent être définies de la manière suivante :

| **Types de ressources** | |
|---|---|
| **Nom de la ressource** | **Remarques** |
| Diapositive | Une diapositive de présentation PowerPoint |
| Lien | Un lien hypertexte |
| Document | Un fichier physique |
| Plan | Un chapitre |
| Mot-clé | Un mot précisant une ressource |

| **Diapositive** | |
|---|---|
| **Nom de la donnée** | **Remarques** |
| Image | Généralement sous forme PNG, JPEG |
| Titre | |
| Mots-clés | Les mots-clés rattachés à cette diapositive |

| **Lien** | |
|---|---|
| **Nom de la donnée** | **Remarques** |
| Titre du lien | Libellé ou nom du lien |
| URL du lien | Généralement HTTP, FTP ou chemin UNC |

| **Document** | |
|---|---|
| **Nom de la donnée** | **Remarque** |
| Fichier ou chemin | Les données concrètes du document |
| Titre | - |
| Commentaires ou notes | - |
| Option | Indication de page ou équivalent |

| **Plan** | |
|---|---|
| **Nom de la donnée** | **Remarques** |
| Titre | Nom du chapitre |
| Profondeur | Niveau (par ex. « I », « II », « a », « b » etc.) |

| **Mot-clé** | |
|---|---|
| **Nom de la donnée** | **Remarques** |
| Mot | Représente un concept |

Avantageusement, cette intégration comprend également le code temporel ou « timecode » permettant de synchroniser le document de présentation et les parties affichées avec le flux vidéo et/ou audio. On associe ainsi chaque partie affichée du document de présentation à un instant précis du flux vidéo et/ou audio, cela permettant d'avoir une relation entre une indexation du flux vidéo et/ou audio et une indexation des documents de présentation et des parties affichées. Dans l'édition multimédia, on peut ainsi élaborer des présentations résultant d'une combinaison spécifique de l'indexation du flux vidéo et/ou audio et de l'indexation précise des documents de présentation qui peuvent être intégrés chronologiquement selon l'indexation du flux vidéo et/ou audio. A titre d'exemple non limitatif, le document de présentation peut être un fichier PowerPoint®, Word®, Excel®, PDF®, ou autre ; et la partie affichée peut avantageusement être une diapositive ou une page d'un fichier cité ci-dessus.

Avec l'invention, on enrichit la base de métadonnées de façon automatique à faible coût, c'est-à-dire sans intervention humaine.

Selon une caractéristique avantageuse de l'invention, lors de l'analyse du texte,
- on détecte également tout lien vers un contenu extérieur,
- on utilise ce lien pour importer et sauvegarder ce contenu extérieur dans le contenu rich-média, et
- on réalise une synchronisation en associant ce contenu extérieur à un code temporel.

Le contenu extérieur peut être un fichier de tout type tel que par exemple un document de référence, un fichier audio, un fichier vidéo, une application... Ainsi, lors de la visualisation ultérieure de l'édition multimédia, l'utilisateur a accès à toute une bibliothèque de contenus extérieurs.

Selon une caractéristique avantageuse de l'invention, on importe le contenu extérieur depuis l'unité de traitement et/ou depuis un réseau de communication de type Internet. On peut réaliser une première recherche automatique en local, puis en cas de recherche infructueuse, effectuer une recherche sur Internet. Lorsqu'une adresse URL par exemple est spécifiée, la recherche sur Internet consiste à télécharger directement le contenu à l'adresse URL.

Selon une autre façon de faire selon l'invention, lors de l'analyse du texte, on détecte également tout lien internet vers un contenu extérieur, on sauvegarde ce lien internet dans le contenu rich-média, et on réalise une synchronisation en associant ce lien internet à un code temporel. Dans ce mode de réalisation, lors de l'élaboration du contenu rich-média, on ne télécharge pas de contenus extérieurs mais uniquement un lien qui sera activé pour télécharger le contenu extérieur lors de la consultation du contenu rich-média une fois élaboré. Un autre avantage de sauvegarder uniquement le lien est d'éviter toute recherche infructueuse temps réel en cas de lien corrompu (déplacement ou inaccessibilité de contenu extérieur). On peut par exemple prévoir de sauvegarder tout contenu extérieur présent dans l'unité de traitement ou dans un réseau local accessible et ne sauvegarder que le lien pour un lien internet.

Les contenus extérieurs présents dans l'unité de traitement et sauvegardés peuvent être préalablement placés dans un dossier spécifique par l'utilisateur.

Selon l'invention, l'étape de sauvegarde de chaque partie affichée du document de présentation est réalisée sous forme d'une image.

Selon une première variante de l'invention, pour réaliser l'analyse de texte, on utilise une application de type API (« Application Programming Interface » en langue anglaise) pour récupérer directement le texte contenu dans la partie affichée du document de présentation, cette application étant une application d'interface avec l'application dans laquelle le document de présentation est ouvert. Par exemple, lorsque le document de présentation est un document Powerpoint®, l'API est une application dédiée permettant d'avoir directement accès au contenu textuel de la diapositive affichée à un instant donné.

Selon une seconde variante de l'invention, pour réaliser l'analyse de texte, on réalise une impression écran de la partie affichée du document de présentation de façon à obtenir une image, puis on effectue l'analyse de texte après une opération de reconnaissance optique de caractères sur l'image ainsi obtenue. En particulier, chaque nouvel affichage sur l'écran est sauvegardé sous forme d'image dans le contenu rich-média avec un code temporel associé. Dans cette variante, on se sert de l'image acquise par « impression écran » afin d'extraire le contenu textuel et identifier des éléments particuliers tels que des mots clés, des titres, des liens, des références,...

Le document de présentation peut être affiché sur une zone de l'écran ou dans une fenêtre dédiée de l'écran.

Selon une caractéristique avantageuse de l'invention, on réalise également une analyse des propriétés du document de présentation de façon à récupérer et sauvegarder dans le contenu rich-média d'autres contenus extérieurs.

Selon un mode de réalisation de l'invention, à chaque document de présentation et à chaque partie affichée du document de présentation, on associe au moins un code temporel et un élément du contenu rich-média. En d'autres termes, il s'agit d'une association de ressources à d'autres ressources (une ressource étant notamment un élément dans la base de métadonnées). Ce mode de réalisation permet de déplacer (modifier le timecode) d'une ressource sans casser ses liens avec d'autres ressources. Cela permet d'enrichir la navigation par document pour l'utilisateur final de l'édition multimédia.

Avantageusement, le lien vers le contenu extérieur est un lien Internet ou un chemin d'accès dans l'unité de traitement. Le lien Internet peut être une adresse URL du contenu extérieur, auquel cas il suffit de télécharger directement le fichier source. Lorsque la référence au contenu extérieur est un chemin d'accès, il peut s'agir du chemin d'accès à un contenu dans l'unité de traitement ou dans un espace mémoire accessible depuis l'unité de traitement.

Selon une caractéristique avantageuse de l'invention, lorsque le flux vidéo et/ou audio est diffusé en direct vers des destinataires via un réseau de communication de type Internet, on transmet également de façon automatique le document de présentation vers ces destinataires dès l'ouverture de ce document de présentation. Cela correspond à un mode dit synchrone où le flux vidéo et/ou audio est diffusé en direct, au contraire d'un mode dit asynchrone où le contenu rich-média est sauvegardé dans un moyen de sauvegarde sous forme de fichier et/ou application et est destiné à être visualisé hors ligne.

En complément notamment de ce qui précède, on peut également envisager une analyse de la parole de l'utilisateur de façon à
- détecter un lien d'un contenu extérieur,
- rechercher ce contenu extérieur dans l'unité de traitement ou via Internet,
- importer et sauvegarder ce contenu extérieur dans le contenu rich-média, et
- réaliser une synchronisation en associant ce contenu extérieur à un code temporel.

S'il s'agit d'un lien internet, on peut ne sauvegarder que le lien internet sans recherche et sauvegarde du contenu extérieur.

Cette analyse de la parole est avantageusement réalisée à des instants prédéterminés ou en réponse à des événements comme ceux définis ci-dessus, entre deux de ces événements, ou pour une durée prédéterminée.

Selon un autre aspect de l'invention, il est prévu un produit programme d'ordinateur téléchargeable depuis un réseau de communication et/ou stocké sur un support lisible par ordinateur et/ou exécutable par un microprocesseur. Ce produit comprend des instructions de code de programme pour la mise en oeuvre d'un procédé pour élaborer un contenu rich-média à partir d'une prestation orale réalisée par un utilisateur, selon l'invention.

Bien entendu, les différentes caractéristiques, formes et variantes de réalisation de l'invention peuvent être associées les unes avec les autres selon diverses combinaisons dans la mesure où elles ne sont pas incompatibles ou exclusives les unes des autres.

D'autres avantages et caractéristiques de l'invention apparaîtront à l'examen de la description détaillée d'un mode de mise en oeuvre nullement limitatif, et des dessins annexés, sur lesquels :
La figure 1 est une vue simplifiée d'une conférence en cours d'enregistrement selon l'invention ;
La figure 2 est une vue schématique d'une fenêtre graphique d'une application logicielle de présentation d'une conférence selon l'invention ;
La figure 3 est un schéma illustrant des étapes d'une récupération automatique de documents de référence selon l'invention au cours de la conférence ; et
La figure 4 représente un exemple de structure d'un système de production d'édition multimédia selon l'invention.

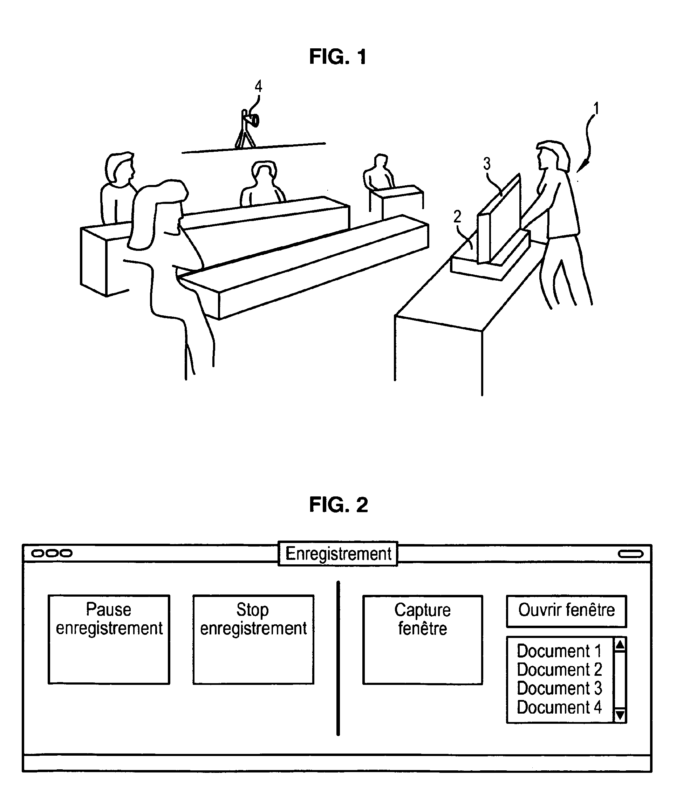

Sur la figure 1 on voit un utilisateur 1 placé en face d'une assemblée dans une salle de conférence. L'utilisateur réalise une prestation orale en se servant d'une présentation informatique, par exemple de type Powerpoint®, au moyen d'une unité de traitement 2 est d'un écran d'affichage 3. Cette unité de traitement 2 comporte des moyens logiciels et matériels, dont un système d'exploitation, permettant de réaliser la présentation et d'être connecté à des ressources informatiques distantes notamment. La production d'une édition multimédia peut être telle que décrit dans le document US 2008-0082581 mais avec un processus d'introduction automatique de documents de référence selon la présente invention.

L'unité de traitement peut comprendre une application d'aide à l'élaboration d'un contenu Rich-Média. Cette application permet de sauvegarder un flux vidéo obtenu à partir d'une caméra 4 disposée dans la salle face à l'utilisateur 1. Elle permet également de définir un axe temporel où des codes temporels (« timecode ») sont associés à des événements particuliers de sorte que l'on élabore dans le contenu Rich-Média une base de métadonnées constituée de données de synchronisation, de mots-clés, de titres, d'images et de documents complémentaires cités par l'utilisateur lors de la conférence.

Le contenu Rich-Média contenant le flux vidéo et/ou audio et les métadonnées peut être produit en grande quantité sur un support dur portable comme un CD ou téléchargé depuis Internet. Mais, lorsqu'on est en mode synchrone, le flux vidéo est également diffusé en direct directement à des destinataires via Internet.

Le procédé selon l'invention permet d'enrichir une base de métadonnées en y introduisant de façon automatique des données hétérogènes (documents, mots clés, lien, titre,...) et en réalisant la synchronisation de ces données hétérogènes. Sur la figure 2 on voit une fenêtre d'une application d'aide à l'élaboration d'un contenu Rich-Média. On voit que l'utilisateur a préparé l'utilisation de quatre documents complémentaires que sont document1, document2, document3 et document4. Lorsqu'il démarre sa conférence, correspondant à l'instant zéro dans les codes temporels, l'utilisateur active l'acquisition du flux vidéo. Pendant sa conférence, lorsque l'utilisateur 1 ouvre document1 en double cliquant par exemple sur document1 sur la fenêtre prédéterminée sur la figure 2, cet événement déclenche la mise en oeuvre d'un processus de capture écran après affichage du document1 sur l'écran. L'image capturée peut être une diapositive d'un fichier PowerPoint® si document1 est par exemple un fichier PowerPoint®. On sauvegarde document1 dans le contenu Rich-Média et on le synchronise en y associant un code temporel correspondant à l'instant d'ouverture de document1. De la même manière, on sauvegarde l'image capturée dans le contenu Rich-Média et on le synchronise en y associant un code temporel correspondant à l'instant d'ouverture de la diapositive correspondante. Si une application d'interface permettant d'obtenir directement le contenu textuel n'est pas disponible, on peut alors utiliser l'image capturée pour réaliser une reconnaissance optique de caractères (OCR) de façon à extraire le contenu textuel de la diapositive affichée du document1. L'application d'aide à l'élaboration d'un contenu Rich-Média réalise ensuite une analyse de contenu textuel de façon à détecter par exemple une ou plusieurs adresses URL que l'on sauvegarde et synchronise au sein du contenu Rich-Média. On importe ensuite le fichier source correspondant à chaque adresse URL. Ces fichiers sources sont sauvegardés dans le contenu Rich-Média comme contenus extérieurs et le code temporel correspondant à l'instant où l'utilisateur 1 a affiché la diapositive correspondante est affecté à ces contenus extérieurs. On enrichit ainsi automatiquement la base de métadonnées avec des documents extérieurs. L'analyse du contenu textuel, la sauvegarde et la synchronisation sont effectuées pour chaque nouvelle diapositive.

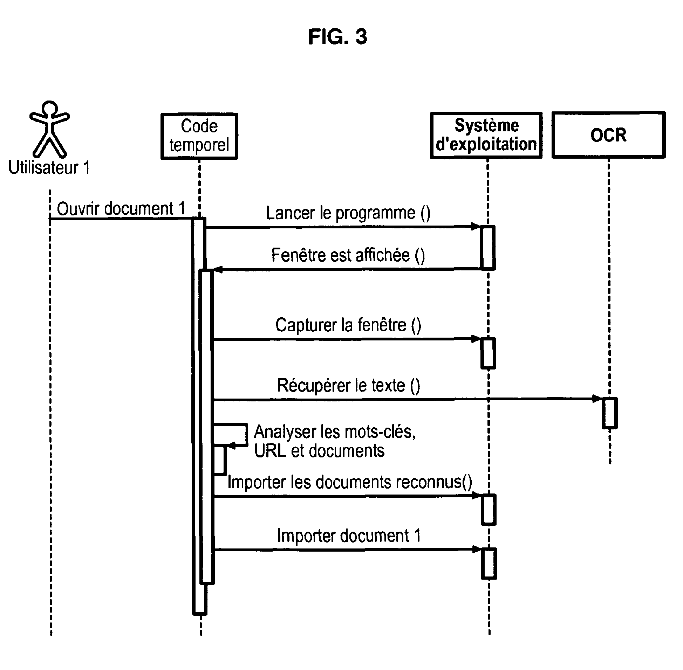

Sur la figure 3, on voit un organigramme simplifié dans lequel l'utilisateur 1 commande l'ouverture du document1. Une commande d'ouverture d'un programme capable de lire document1 est transmise vers le système d'exploitation qui affiche une fenêtre. On réalise ensuite la capture de la fenêtre de façon à obtenir une image qui sera également sauvegardée dans la base de métadonnées. Lorsque document1 est un fichier texte par exemple, le texte peut être extrait directement au moyen d'une API. Dans le cas présent on capture une image et on extrait un contenu textuel en utilisant une reconnaissance optique de caractères (OCR). Puis on analyse le contenu textuel de façon à identifier des mots-clés, URL et chemin d'accès à des documents. L'ensemble de ces éléments identifiés est sauvegardé dans la base de métadonnées. Les documents identifiés lors de l'analyse sont importés et sauvegardés dans la base de métadonnées avec un code temporel correspondant. On importe également document1 dans la base de métadonnées.

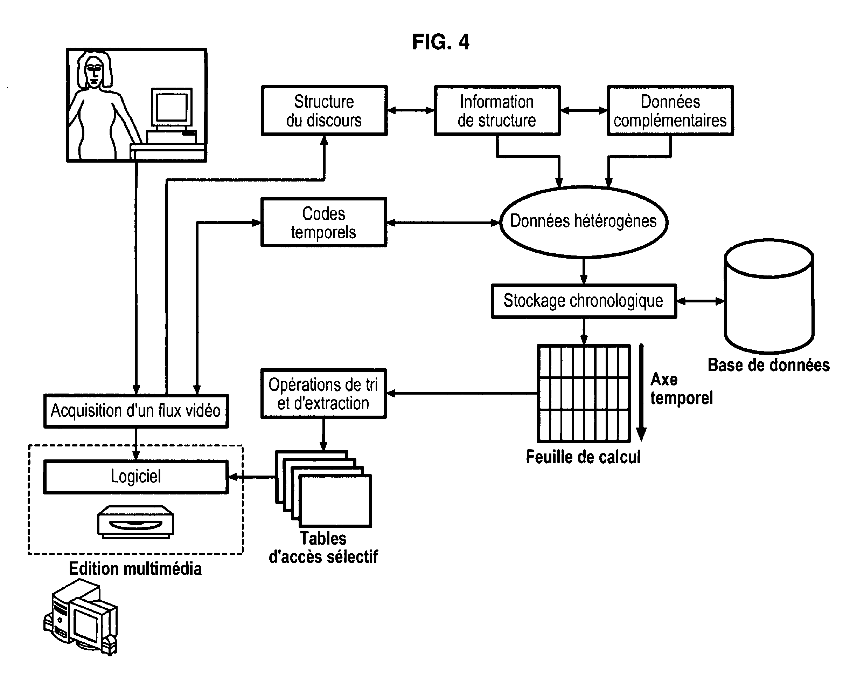

On va maintenant décrire de façon générale, en référence à la figure 4, un exemple d'utilisation de présentation selon l'invention pour une production d'une édition multimédia. Une conférence est tout d'abord enregistrée sous la forme d'un flux oral (vidéo et/ou audio). Il s'agit d'une activité de production audiovisuelle (captation, montage).

A cette conférence est associée des documents de présentation, la structure d'un discours, par exemple le plan de ce discours, décrite par des informations de structure auxquelles sont associées des données complémentaires telles que des références de publications ou d'articles cités par le conférencier, et des contenus extérieurs récupérés de façon automatique en temps réel pendant la conférence. L'ensemble des documents de présentation, des informations de structure, des données complémentaires et des contenus extérieurs, qui constitue des données hétérogènes, est stocké de manière chronologique dans une base de métadonnées sous forme de feuille de tableur ou de préférence sous forme de structure arborescente pour représenter/sauvegarder les données (formats basés sur la norme XML).

Les données hétérogènes seront ensuite traitées, au moyen d'un logiciel tableur du marché ou développé spécifiquement, dans une feuille de tableur. Des opérations de tri et d'extraction effectuées sur des données particulières de l'ensemble des données hétérogènes permettent de générer, à partir de la feuille de tableur, un ensemble de tables d'accès sélectif conçues pour permettre un accès ciblé à des fragments sélectionnés de la séquence concernée au sein du flux vidéo. Ce procédé de génération de tables d'accès sélectifs peut être automatisé.

L'édition multimédia produite avec le système selon l'invention consiste en la combinaison d'un flux vidéo et/ou audio enregistré numériquement sur un support tel qu'un CD-ROM ou tout autre support numérique, de l'ensemble des tables d'accès sélectif issues de la feuille de tableur, et d'un logiciel d'exploitation de ces tables.

L'utilisateur d'une édition multimédia obtenue avec le procédé de production selon l'invention dispose d'un outil interactif lui permettant de disposer, sur une même page écran, d'une première fenêtre de diffusion d'un flux vidéo et d'une seconde fenêtre de visualisation de données et d'informations en relation avec la séquence vidéo en cours de diffusion. De nombreux modes d'accès peuvent alors être envisagés pour exploiter pleinement les avantages procurés par le procédé d'organisation selon l'invention. On peut alors proposer de très nombreuses fonctionnalités telles que le suivi en temps réel du plan de conférence ou l'accès en temps réel à des références bibliographiques en relation avec le discours du conférencier.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour élaborer un contenu rich-média à partir d'une prestation orale réalisée par un utilisateur; cet utilisateur se servant d'une unité de traitement et d'un écran pour afficher au moins un document de présentation ; le contenu rich-média comprenant un flux vidéo et/ou audio et des codes temporels acquis en temps réel, pour chaque document de présentation ouvert par l'utilisateur lors de l'acquisition du flux vidéo et/ou audio en temps réel :
- on sauvegarde de façon automatique et en temps réel ce document de présentation dans le contenu rich-média,
- on réalise une synchronisation en associant ce document de présentation à un code temporel,
- on sauvegarde de façon automatique et en temps réel chaque partie de document de présentation telle qu'affichée successivement sur l'écran,
- on réalise une synchronisation en associant chaque partie affichée du document de présentation à un code temporel qui est relatif à l'instant d'affichage de la partie affichée,
- on extrait et on analyse de façon automatique et en temps réel le texte contenu dans chaque partie affichée du document de présentation de façon à détecter une liste de mots clés que l'on sauvegarde sous forme de métadonnées dans le contenu rich-média,
**caractérisé en ce que** lors de l'analyse du texte,
- on détecte également tout lien vers un contenu extérieur,
- on utilise ce lien pour importer et sauvegarder ce contenu extérieur dans le contenu rich-média, et
- on réalise une synchronisation en associant ce contenu extérieur à un code temporel.

2. Procédé selon la revendication 1, **caractérisé en ce qu'**on importe le contenu extérieur depuis l'unité de traitement et/ou un réseau de communication de type Internet.

3. Procédé selon l'une quelconque des revendications précédentes, **caractérisé en ce que** lors de l'analyse du texte,
- on détecte également tout lien internet vers un contenu extérieur,
- on sauvegarde ce lien internet dans le contenu rich-média, et
- on réalise une synchronisation en associant ce lien internet à un code temporel.

4. Procédé selon l'une quelconque des revendications précédentes, **caractérisé en ce que** l'étape de sauvegarde de chaque partie affichée du document de présentation est réalisée sous forme d'une image.

5. Procédé selon l'une quelconque des revendications précédentes, **caractérisé en ce que** pour réaliser l'analyse de texte, on utilise une application de type API (« Application Programming Interface » en langue anglaise) pour récupérer directement le texte contenu dans la partie affichée du document de présentation, cette application étant une application d'interface avec l'application dans laquelle le document de présentation est ouvert.

6. Procédé selon l'une quelconque des revendications 1 à 5, **caractérisé en ce que** pour réaliser l'analyse de texte, on réalise une impression écran de la partie affichée du document de présentation de façon à obtenir une image, puis on effectue l'analyse de texte après une opération de reconnaissance optique de caractères sur l'image ainsi obtenue.

7. Procédé selon l'une quelconque des revendications précédentes, **caractérisé en ce qu'**on réalise également une analyse des propriétés du document de présentation de façon à récupérer et sauvegarder dans le contenu rich-média d'autres contenus extérieurs.

8. Procédé selon l'une quelconque des revendications précédentes, **caractérisé en ce qu'**à chaque document de présentation et à chaque partie affichée du document de présentation, on associe au moins un code temporel et un élément du contenu rich-média.

9. Procédé selon l'une quelconque des revendications précédentes, **caractérisé en ce que** le lien vers le contenu extérieur est un lien Internet ou un chemin d'accès dans l'unité de traitement.

10. Procédé selon l'une quelconque des revendications précédentes, **caractérisé en ce que** le document de présentation est affiché sur une zone de l'écran ou dans une fenêtre dédiée de l'écran.

11. Procédé selon l'une quelconque des revendications précédentes, **caractérisé en ce que** lorsque le flux vidéo et/ou audio est diffusé en direct vers des destinataires via un réseau de communication de type Internet, on transmet également de façon automatique le document de présentation vers ces destinataires dès l'ouverture de ce document de présentation.

12. Procédé selon l'une quelconque des revendications précédentes, **caractérisé en ce qu'**on analyse également la parole de l'utilisateur de façon à
- détecter une référence d'un contenu extérieur,
- rechercher ce contenu extérieur dans l'unité de traitement ou via Internet,
- importer et sauvegarder ce contenu extérieur dans le contenu rich-média, et
- réaliser une synchronisation en associant ce contenu extérieur à un code temporel.

13. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre d'un procédé pour élaborer un contenu rich-média à partir d'une prestation orale réalisée par un utilisateur, selon l'une au moins des revendications 1 à 12.

## Patentansprüche

1. Verfahren zur Erstellung eines Rich-Media-Inhalts auf Grundlage einer mündlichen Leistung eines Benutzers; wobei jener Benutzer eine Prozessoreinheit und ein Bildschirm zur Anzeige wenigstens eines Präsentationsdokuments verwendet; wobei der Rich-Media-Inhalt einen Video- und/oder Audiostrom und in Echtzeit erfassten Zeitcodes für jedes Präsentationsdokument, das durch den Benutzer bei der Echtzeit-Erfassung des Video- und/oder Audiostroms geöffnet wird, umfasst:
- das Präsentationsdokument wird automatisch und in Echtzeit im Rich-Media-Inhalt gespeichert,
- eine Synchronisierung wird durchgeführt, wobei diesem Präsentationsdokument ein Zeitcode zugeordnet wird,
- jeder Abschnitt eines Präsentationsdokuments, so wie er sukzessiv am Bildschirm angezeigt wird, wird automatisch und in Echtzeit gespeichert,
- eine Synchronisierung wird durchgeführt, wobei jedem angezeigten Abschnitt des Präsentationsdokuments ein auf den Zeitpunkt der Anzeige des angezeigten Abschnitts bezogenen Zeitcode zugeordnet wird,
- der in jedem angezeigten Abschnitt des Präsentationsdokuments enthaltene Text wird extrahiert und automatisch und in Echtzeit analysiert, damit eine Liste von Keywords erkannt wird, welche in Form von Metadaten im Rich-Media-Inhalt gespeichert werden,
**dadurch gekennzeichnet, dass** bei der Textanalyse
- auch jedweder Link zu einem Außeninhalt erkannt wird,
- dieser Link zum Importieren und Speichern des Außeninhalts im Rich-Media-Inhalt verwendet wird, und
- eine Synchronisierung durchgeführt wird, wobei diesem Außeninhalt ein Zeitcode zugeordnet wird.

2. Verfahren nach Anspruch 1, **dadurch gekennzeichnet, dass** der Außeninhalt aus der Prozessoreinheit und/oder einem Kommunikationsnetz vom Typ Internet importiert wird.

3. Verfahren nach einem der vorhergehenden Ansprüche, **dadurch gekennzeichnet, dass** bei der Textanalyse
- auch jedweder Hyperlink zu einem Außeninhalt erkannt wird,
- dieser Hyperlink im Rich-Media-Inhalt gespeichert wird, und
- eine Synchronisierung durchgeführt wird, wobei diesem Hyperlink ein Zeitcode zugeordnet wird.

4. Verfahren nach einem der vorhergehenden Ansprüche, **dadurch gekennzeichnet, dass** der Schritt zur Speicherung jedes angezeigten Abschnitts des Präsentationsdokuments in Form eines Bildes durchgeführt wird.

5. Verfahren nach einem der vorhergehenden Ansprüche, **dadurch gekennzeichnet, dass** zur Durchführung der Textanalyse eine Anwendung vom Typ API (englisch "Application Programming Interface") zur direkten Übernahme des im angezeigten Abschnitt des Präsentationsdokuments enthaltenen Textes verwendet wird, wobei es sich bei dieser Anwendung um eine Schnittstellenanwendung mit der Anwendung, in der das Präsentationsdokument geöffnet ist, handelt.

6. Verfahren nach einem der Ansprüche 1-5, **dadurch gekennzeichnet, dass** zur Durchführung der Textanalyse ein Screenshot des angezeigten Abschnitts des Präsentationsdokuments gemacht wird, sodass ein Bild gewonnen wird, dass dann die Textanalyse nach einem Arbeitsgang zur optischen Erkennung von Zeichen auf dem somit erzeugten Bild durchgeführt wird.

7. Verfahren nach einem der vorhergehenden Ansprüche, **dadurch gekennzeichnet, dass** auch eine Analyse der Eigenschaften des Präsentationsdokuments durchgeführt wird, um weitere Außeninhalte zu übernehmen und im Rich-Media-Inhalt zu speichern.

8. Verfahren nach einem der vorhergehenden Ansprüche, **dadurch gekennzeichnet, dass** jedem Präsentationsdokument und jedem angezeigten Abschnitt des Präsentationsdokuments wenigstens ein Zeitcode und ein Element des Rich-Media-Inhalts zugeordnet werden.

9. Verfahren nach einem der vorhergehenden Ansprüche, **dadurch gekennzeichnet, dass** es sich bei dem Link zu dem Außeninhalt um einen Hyperlink oder um einen Zugriffspfad in der Prozessoreinheit handelt.

10. Verfahren nach einem der vorhergehenden Ansprüche, **dadurch gekennzeichnet, dass** das Präsentationsdokument auf einem Bildschirmbereich oder in einem dedizierten Fenster des Bildschirms angezeigt wird.

11. Verfahren nach einem der vorhergehenden Ansprüche, **dadurch gekennzeichnet, dass** bei live Übertragung des Video- und/oder Audiostroms an Empfänger über ein Kommunikationsnetz vom Typ Internet automatisch auch das Präsentationsdokument an diese Empfänger weitergeleitet wird, sobald das Präsentationsdokument geöffnet wird.

12. Verfahren nach einem der vorhergehenden Ansprüche, **dadurch gekennzeichnet, dass** auch die Rede des Benutzers analysiert wird, sodass
- eine Referenz auf einen Außeninhalt erkannt wird,
- diesen Außeninhalt in der Prozessoreinheit oder über Internet gesucht wird,
- diesen Außeninhalt importiert und im Rich-Media-Inhalt gespeichert wird, und
- eine Synchronisierung durchgeführt wird, wobei diesem Außeninhalt ein Zeitcode zugeordnet wird.

13. Produkt, Computerprogramm, von einem Kommunikationsnetz herunterladbar und/oder auf einem computerlesbaren Medium gespeichert und/oder durch einen Mikroprozessor ausführbar, **dadurch gekennzeichnet, dass** es Programmcode-Befehle zur Umsetzung eines Verfahrens zur Erstellung eines Rich-Media-Inhalts auf Grundlage einer mündlichen Leistung eines Benutzers umfasst, nach mindestens einem der Ansprüche 1-12.

## Claims

1. Method for the production of a rich-media content from an oral presentation carried out by a user; this user making use of a processing unit and a screen in order to display at least one presentation document; the rich-media content comprising a video and/or audio stream and time codes acquired in real time, for each presentation document opened by the user during the acquisition of the video and/or audio stream in real time:
- this presentation document is saved automatically and in real time in the rich-media content,
- a synchronization is carried out by associating this presentation document with a time code,
- each part of the presentation document is saved automatically and in real time as displayed successively on the screen,
- a synchronization is carried out by associating each displayed part of the presentation document with a time code which relates to the time of display of the displayed part,
- the text contained in each displayed part of the presentation document is extracted and analyzed automatically and in real time so as to detect a list of key words that are saved in the form of metadata in the rich-media content, **characterized in that** during analysis of the text,
- any link to an external content is also detected,
- this link is used to import and save this external content in the rich-media content, and
- a synchronization is carried out by associating this external content with a time code.

2. Method according to claim 1, **characterized in that** the external content is imported from the processing unit and/or a communication network of internet type.

3. Method according to any one of the preceding claims, **characterized in that** during analysis of the text,
- any internet link to an external content is also detected,
- this internet link is saved in the rich-media content, and
- a synchronization is carried out by associating this internet link with a time code.

4. Method according to any one of the preceding claims, **characterized in that** the step of saving each displayed part of the presentation document is carried out in the form of an image.

5. Method according to any one of the preceding claims, **characterized in that** in order to carry out analysis of the text, an application of the API ("Application Programming Interface") type is used in order to directly retrieve the text contained in the displayed part of the presentation document, this application being an application that interfaces with the application in which the presentation document is opened.

6. Method according to any one of claims 1 to 5, **characterized in that** in order to carry out analysis of the text, a screen shot of the displayed part of the presentation document is produced so as to obtain an image, then analysis of the text is carried out after an operation of optical character recognition on the image thus obtained.

7. Method according to any one of the preceding claims, **characterized in that** an analysis of the properties of the presentation document is also carried out so as to retrieve and save other external contents in the rich-media content.

8. Method according to any one of the preceding claims, **characterized in that** at least one time code and one element of the rich-media content is associated with each presentation document and each displayed part of the presentation document.

9. Method according to any one of the preceding claims, **characterized in that** the link to the external content is an internet link or an access path in the processing unit.

10. Method according to any one of the preceding claims, **characterized in that** the presentation document is displayed in an area of the screen or in a dedicated window of the screen.

11. Method according to any one of the preceding claims, **characterized in that** when the video and/or audio stream is disseminated directly to recipients via an internet type communication network, the presentation document is also automatically transmitted to these recipients as soon as this presentation document is opened.

12. Method according to any one of the preceding claims, **characterized in that** the user's speech is also analyzed so as to:
- detect a reference to an external content,
- search for this external content in the processing unit or via the internet,
- import and save this external content in the rich-media content, and
- carry out a synchronization by associating this external content with a time code.

13. Computer program product that can be downloaded from a communication network and/or stored on a medium that can be read by a computer and/or executed by a microprocessor, **characterized in that** it comprises program code instructions for the implementation of a method for developing a rich-media content from a spoken performance carried out by a user, according to at least one of claims 1 to 12.
